# EUROPEAN PATENT APPLICATION

(11) **EP 4 783 477 A1**
(43) Date of publication of application: **29.07.2026**
(21) Application number: 24876451.6
(22) Date of filing: 29.09.2024
(51) Int. Cl.: H04B 7/0413

(54) **COMMUNICATION METHOD, SYSTEM AND APPARATUS, STORAGE MEDIUM, AND PROGRAM PRODUCT**

(30) Priority: 13.10.2023 CN 202311332184
(71) Applicant: HUAWEI TECHNOLOGIES CO., LTD., Shenzhen 518129 (CN)
(72) Inventor: ZHENG, Bilei, Shenzhen, Guangdong 518129 (CN); ZHU, Chengzhi, Shenzhen, Guangdong 518129 (CN); HUANG, Guan, Shenzhen, Guangdong 518129 (CN); LU, Jun, Shenzhen, Guangdong 518129 (CN); GAN, Yuqin, Shenzhen, Guangdong 518129 (CN)
(74) Representative: Grünecker Patent- und Rechtsanwälte PartG mbB
(86) International application number: PCT/CN2024/122534
(87) International publication number: WO 2025/077636

(57) **Abstract**

A communication method, system, and apparatus, a storage medium, and a program product are disclosed. In this application, a first transmission and reception point is configured to belong to a first cluster, and first configuration information is sent to the first transmission and reception point, where the first configuration information indicates that the first transmission and reception point belongs to a second cluster. In this way, automatic re-clustering can be implemented, and self-organizing distributed networking can be implemented, thereby improving networking flexibility.

## Description

This application claims priority to Chinese Patent Application No. 202311332184.7, filed with the China National Intellectual Property Administration on October 13, 2023 and entitled "COMMUNICATION METHOD, SYSTEM, AND APPARATUS, STORAGE MEDIUM, AND PROGRAM PRODUCT", which is incorporated herein by reference in its entirety.

### TECHNICAL FIELD

This application relates to the field of communication technologies, and in particular, to a communication method, system, and apparatus, a storage medium, and a program product.

### BACKGROUND

Cell-free (cell-free) massive multiple-input multiple-output (massive MIMO) introduces the concept of a cluster. One cluster includes one or more transmission and reception points, and each of the one or more transmission and reception points can serve one terminal device. Communication data to be sent or received by each of transmission and reception points is uniformly processed by a single processing unit. By stitching one or more distributed transmission and reception points into a single large virtual cell, conventional cell boundaries disappear and all scheduling is unified.

However, in the foregoing technology, a connection relationship between each of the transmission and reception points in a cluster and the processing unit is fixed at the beginning of cluster establishment, resulting in poor networking flexibility. In the occurrence of service or location changes of the terminal device, network performance may deteriorate.

In view of this, based on the foregoing architecture featuring distributed transmission and reception points and centralized processing of communication data, how to implement automatic and flexible networking is an urgent problem to be resolved.

### SUMMARY

This application provides a communication method, system, and apparatus, a storage medium, and a program product, to implement automatic and flexible networking.

According to a first aspect, a communication method is provided. The method may be performed by a processing unit or a chip, a circuit, or a device used for the processing unit.

The method includes: configuring a first transmission and reception point to belong to a first cluster; and sending first configuration information, where the first configuration information indicates that the first transmission and reception point belongs to a second cluster. In this aspect, automatic re-clustering can be implemented, and self-organized distributed networking can be implemented, thereby improving networking flexibility. In addition, a quantity and a scale of clusters, and a cluster to which each transmission and reception point is allocated to serve a terminal device are determined by the processing unit and are flexible and dynamic. However, in an existing networking solution, a connection relationship of each transmission and reception point is determined at the beginning of cluster establishment, and remains unchanged in subsequent running. If the connection relationship needs to be changed, a service of the transmission and reception point needs to be stopped and a network needs to be manually re-deployed. In contrast, in the solution of this embodiment, because a physical connection relationship between each transmission and reception point and each processing unit is established in advance, an allocation relationship between a transmission and reception point and a cluster can be adjusted and self-organized online based on service load and a channel status of the terminal device when impact on a cell service is small, so as to ensure that overall network performance is stable and optimal, and improve networking flexibility. In this embodiment, a delay of switching between different clusters by the transmission and reception point can be reduced, service continuity can be ensured, and switching-free experience can be achieved.

For example, the processing unit may further notify the processing unit corresponding to the second cluster of the configuration.

In a possible implementation, before sending the first configuration information, the method further includes: receiving, from the first transmission and reception point, at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point. In this implementation, the processing unit may learn, by receiving the at least one piece of network status information from the first transmission and reception point, a communication status, a load status, and the like between the transmission and reception point and the terminal device in the cluster managed by the processing unit, so that automatic clustering can be better performed based on the at least one piece of network status information.

For example, the processing unit may alternatively exchange the at least one piece of network status information with the processing unit corresponding to another cluster.

In another possible implementation, sending the first configuration information includes: if the quantity of terminal devices in the first cluster that are served by the first transmission and reception point is received, and the quantity of terminal devices in the first cluster that are served by the first transmission and reception point is greater than or equal to a first threshold, sending the first configuration information, where a quantity of terminal devices in the second cluster that are served by the first transmission and reception point is less than or equal to a second threshold, and the second threshold is less than the first threshold. In this implementation, when the first transmission and reception point belongs to the first cluster, load of the first transmission and reception point is excessively heavy, and a communication resource allocated by the processing unit to the first transmission and reception point may not meet a communication requirement between the first transmission and reception point and the terminal device that is in the first cluster and that is served by the first transmission and reception point, the first transmission and reception point is allocated to the second cluster, and the second cluster may allocate sufficient communication resources to the first transmission and reception point, so as to improve network performance of the first transmission and reception point and the terminal device that is in the second cluster and that is served by the first transmission and reception point.

In still another possible implementation, sending the first configuration information includes: if the channel quality of the channel between the first transmission and reception point and the terminal device that is in the first cluster and that is served by the first transmission and reception point is received, and if the channel quality is less than or equal to a third threshold, sending the first configuration information, where channel quality of a channel between the first transmission and reception point and a terminal device that is in the second cluster and that is served by the first transmission and reception point is greater than or equal to a fourth threshold, and the fourth threshold is greater than the third threshold. In this implementation, when the channel quality of the channel between the first transmission and reception point and the terminal device that is served by the first transmission and reception point and that is in the cluster in which the first transmission and reception point is currently located is poor, clustering adjustment is performed based on channel quality of channels between the first transmission and reception point and the terminal devices in different clusters, so that the first transmission and reception point can better serve the terminal device, thereby improving communication reliability.

In still another possible implementation, sending the first configuration information includes: if the communication rate between the first transmission and reception point and the terminal device that is in the first cluster and that is served by the first transmission and reception point is received, and if the communication rate is less than or equal to a fifth threshold, sending the first configuration information, where a communication rate between the first transmission and reception point and a terminal device that is in the second cluster and that is served by the first transmission and reception point is greater than or equal to a sixth threshold, and the sixth threshold is greater than the fifth threshold. In this implementation, when the communication rate between the first transmission and reception point and the terminal device that is served by the first transmission and reception point and that is in the cluster in which the first transmission and reception point is currently located is poor, the first transmission and reception point is allocated to the second cluster. The second cluster may allocate sufficient communication resources to the first transmission and reception point, so as to increase the communication rate between the first transmission and reception point and the terminal device served by the first transmission and reception point.

According to a second aspect, a communication method is provided. The method may be performed by a first transmission and reception point or a chip or a circuit used for a first transmission and reception point.

The method includes: determining that a first transmission and reception point is configured to belong to a first cluster; and receiving first configuration information, where the first configuration information indicates that the first transmission and reception point belongs to a second cluster. In this aspect, automatic re-clustering can be implemented, and self-organizing distributed networking can be implemented, thereby improving networking flexibility. In addition, a quantity and a scale of clusters, and a cluster to which each transmission and reception point is allocated to serve the terminal device are determined by the processing unit and are flexible and dynamic. However, in an existing networking solution, a connection relationship of each transmission and reception point is determined at the beginning of cluster establishment, and remains unchanged in subsequent running. If the connection relationship needs to be changed, a service of the transmission and reception point needs to be stopped and a network needs to be manually re-deployed. In contrast, in the solution of this embodiment, because a physical connection relationship between each transmission and reception point and each processing unit is established in advance, an allocation relationship between a transmission and reception point and a cluster can be adjusted and self-organized online based on service load and a channel status of the terminal device when impact on a cell service is small, so as to ensure that overall network performance is stable and optimal, and improve networking flexibility. In this embodiment, a delay of switching between different clusters by the transmission and reception point can be reduced, service continuity can be ensured, and switching-free experience can be achieved.

In a possible implementation, before receiving the first configuration information, the method further includes: reporting at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point. In this implementation, the first transmission and reception point reports the at least one piece of network status information to the processing unit, so that the processing unit can learn of a communication status, a load status, and the like between the transmission and reception point and the terminal device in the cluster managed by the processing unit, so that automatic clustering can be better performed based on the at least one piece of network status information.

According to a third aspect, a communication apparatus is provided, and is configured to implement the method in any one of the first aspect or the implementations of the first aspect. The apparatus may be a processing unit, or may be a module (for example, a processor, a chip, or a chip system) used in a processing unit, or may be a logical node, a logical module, or software that can implement all or some functions of a processing unit. In an implementation, the apparatus may include a sending unit and a receiving unit, and may further include a processing unit. The sending unit and the receiving unit may be independent of each other, or may be combined together (which may be referred to as a "transceiver unit").

According to a fourth aspect, a communication apparatus is provided, and is configured to implement the method in any one of the second aspect or the implementations of the second aspect. The apparatus may be a first transmission and reception point, or may be a module (for example, a processor, a chip, or a chip system) used in a first transmission and reception point, or may be a logical node, a logical module, or software that can implement all or some functions of a first transmission and reception point. In an implementation, the apparatus may include a sending unit and a receiving unit, and may further include a processing unit. The sending unit and the receiving unit may be independent of each other, or may be combined together (which may be referred to as a "transceiver unit").

In a possible implementation, the apparatuses in the third aspect and the fourth aspect each include a module configured to separately perform the method in any one of the first aspect and the second aspect or any implementation of the first aspect and the second aspect.

In another possible implementation, the apparatuses in the third aspect and the fourth aspect include a processor coupled to a memory. The processor is configured to implement the apparatuses in performing corresponding functions in the foregoing methods. The memory is configured to be coupled to the processor, and stores a program (instructions) and/or data necessary for the apparatus. Optionally, the apparatus may further include a communication interface configured to implement communication between the apparatus and another network element. Optionally, the memory may be located inside the apparatus, or may be located outside the apparatus.

In still another possible implementation, the apparatuses in the third aspect and the fourth aspect include a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to: receive a signal from an apparatus other than the apparatus and transmit the signal to the processor, or send a signal from the processor to an apparatus other than the apparatus. When the apparatus is the chip, the transceiver apparatus is a transceiver circuit or an input/output interface.

When the apparatuses in the third aspect and the fourth aspect are chips, the sending unit may be an output unit, for example, an output circuit or a communication interface, and the receiving unit may be an input unit, for example, an input circuit or a communication interface. When the apparatus is a terminal, the sending unit may be a transmitter or a transmitting machine, and the receiving unit may be a receiver or a receiving machine.

According to a fifth aspect, a communication method is provided. The method may be performed by a communication system, and the system includes a central unit, a distributed unit, and a first transmission and reception point.

The method includes: A central unit configures a first transmission and reception point to belong to a first cluster; a distributed unit configures, based on the configuration of the central unit, the first transmission and reception point to belong to the first cluster; the central unit sends first configuration information to the distributed unit, where the first configuration information indicates that the first transmission and reception point belongs to a second cluster; and the distributed unit sends the first configuration information to the first transmission and reception point.

In a possible implementation, before the central unit sends the first configuration information to the distributed unit, the method further includes: The distributed unit receives, from the first transmission and reception point, at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point; and the distributed unit sends, to the central unit, the at least one piece of network status information reported by the first transmission and reception point.

In another possible implementation, that the central unit sends the first configuration information to the distributed unit includes: If the central unit receives the quantity of terminal devices in the first cluster that are served by the first transmission and reception point, and the quantity of terminal devices in the first cluster that are served by the first transmission and reception point is greater than or equal to a first threshold, the central unit sends the first configuration information to the distributed unit, where a quantity of terminal devices in the second cluster that are served by the first transmission and reception point is less than or equal to a second threshold, and the second threshold is less than the first threshold.

In another possible implementation, that the central unit sends the first configuration information to the distributed unit includes: If the central unit receives the channel quality of the channel between the first transmission and reception point and the terminal device that is in the first cluster and that is served by the first transmission and reception point, and if the channel quality is less than or equal to a third threshold, the central unit sends the first configuration information to the distributed unit, where channel quality of a channel between the first transmission and reception point and a terminal device that is in the second cluster and that is served by the first transmission and reception point is greater than or equal to a fourth threshold, and the fourth threshold is greater than the third threshold.

In still another possible implementation, that the central unit sends the first configuration information to the distributed unit includes: If the central unit receives the communication rate between the first transmission and reception point and the terminal device that is in the first cluster and that is served by the first transmission and reception point, and if the communication rate is less than or equal to a fifth threshold, the central unit sends the first configuration information to the distributed unit, where a communication rate between the first transmission and reception point and a terminal device that is in the second cluster and that is served by the first transmission and reception point is greater than or equal to a sixth threshold, and the sixth threshold is greater than the fifth threshold.

According to a sixth aspect, a communication system is provided. The system includes a first distributed unit and a first transmission and reception point.

The first distributed unit is configured to configure the first transmission and reception point to belong to a first cluster, and the first distributed unit is further configured to send first configuration information to the first transmission and reception point, where the first configuration information indicates that the first transmission and reception point belongs to a second cluster.

In a possible implementation, the system further includes a second distributed unit, the first distributed unit is connected to the second distributed unit, the first distributed unit is responsible for managing the first cluster, and the second distributed unit is responsible for managing the second cluster.

In another possible implementation, the first transmission and reception point is further configured to report, to the first distributed unit, at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point.

In still another possible implementation, the first distributed unit is further configured to: if the first distributed unit receives the quantity of terminal devices in the first cluster that are served by the first transmission and reception point, and the quantity of terminal devices in the first cluster that are served by the first transmission and reception point is greater than or equal to a first threshold, send the first configuration information to the first transmission and reception point, where a quantity of terminal devices in the second cluster that are served by the first transmission and reception point is less than or equal to a second threshold, and the second threshold is less than the first threshold.

In still another possible implementation, the first distributed unit is further configured to: if the first distributed unit receives the channel quality of the channel between the first transmission and reception point and the terminal device that is in the first cluster and that is served by the first transmission and reception point, and if the channel quality is less than or equal to a third threshold, send the first configuration information to the first transmission and reception point, where channel quality of a channel between the first transmission and reception point and a terminal device that is in the second cluster and that is served by the first transmission and reception point is greater than or equal to a fourth threshold, and the fourth threshold is greater than the third threshold.

In still another possible implementation, the first distributed unit is further configured to: if the first distributed unit receives the communication rate between the first transmission and reception point and the terminal device that is in the first cluster and that is served by the first transmission and reception point, and if the communication rate is less than or equal to a fifth threshold, send the first configuration information, where a communication rate between the first transmission and reception point and a terminal device that is in the second cluster and that is served by the first transmission and reception point is greater than or equal to a sixth threshold, and the sixth threshold is greater than the fifth threshold.

According to a seventh aspect, a communication system is provided. The system includes a central unit, a distributed unit, and a first transmission and reception point.

The central unit is configured to configure a first transmission and reception point to belong to a first cluster; the distributed unit is configured to configure, based on the configuration of the central unit, the first transmission and reception point to belong to the first cluster; the central unit is further configured to send first configuration information to the distributed unit, where the first configuration information indicates that the first transmission and reception point belongs to a second cluster; and the distributed unit is further configured to send the first configuration information to the first transmission and reception point.

In a possible implementation, the first transmission and reception point is further configured to report, to the distributed unit, at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point; and the distributed unit is further configured to send the at least one piece of network status information to the central unit.

In another possible implementation, the central unit is further configured to: if the central unit receives the quantity of terminal devices in the first cluster that are served by the first transmission and reception point, and the quantity of terminal devices in the first cluster that are served by the first transmission and reception point is greater than or equal to a first threshold, send the first configuration information to the distributed unit, where a quantity of terminal devices in the second cluster that are served by the first transmission and reception point is less than or equal to a second threshold, and the second threshold is less than the first threshold.

In still another possible implementation, the central unit is further configured to: if the central unit receives the channel quality of the channel between the first transmission and reception point and the terminal device that is in the first cluster and that is served by the first transmission and reception point, and if the channel quality is less than or equal to a third threshold, send the first configuration information to the distributed unit, where channel quality of a channel between the first transmission and reception point and a terminal device that is in the second cluster and that is served by the first transmission and reception point is greater than or equal to a fourth threshold, and the fourth threshold is greater than the third threshold.

In still another possible implementation, the central unit is further configured to: if the central unit receives the communication rate between the first transmission and reception point and the terminal device that is in the first cluster and that is served by the first transmission and reception point, and if the communication rate is less than or equal to a fifth threshold, send the first configuration information to the distributed unit, where a communication rate between the first transmission and reception point and a terminal device that is in the second cluster and that is served by the first transmission and reception point is greater than or equal to a sixth threshold, and the sixth threshold is greater than the fifth threshold.

According to an eighth aspect, a computer-readable storage medium is provided. The storage medium stores a computer program or instructions. When the computer program or the instructions is/are executed by an apparatus, the method in any one of the foregoing aspects or implementations of the foregoing aspects is implemented.

According to a ninth aspect, a computer program product including instructions is provided. When the instructions are run on an apparatus, the method in any one of the foregoing aspects or implementations of the foregoing aspects is implemented.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a schematic flowchart of a communication method according to an embodiment of this application;
FIG. 4A is a diagram of an example of re-clustering according to an embodiment of this application;
FIG. 4B is a diagram of another example of re-clustering according to an embodiment of this application;
FIG. 5 is a diagram of an architecture of a communication system in a scenario according to an embodiment of this application;
FIG. 6 is a diagram of still another communication system according to an embodiment of this application;
FIG. 7 is a schematic flowchart of a communication method based on the system shown in FIG. 6;
FIG. 8 is a diagram of still another communication system according to an embodiment of this application;
FIG. 9A and FIG. 9B are a schematic flowchart of a communication method based on the communication system shown in FIG. 8;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

The following describes embodiments of this application with reference to the accompanying drawings in embodiments of this application.

At least one piece (item) in this application below indicates one piece (item) or a plurality of pieces (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that in this application, terms such as "example" or "for example" are used to represent giving an example, an illustration, or a description. Any method or design solution described as an "example" or "for example" in this application should not be construed as being more preferred or having more advantages than another method or design solution. Exactly, use of the term "example", "for example", or the like is intended to present a related concept in a specific manner.

Technologies provided in this application may be applied to various communication systems. For example, the communication system may be a 4th generation (4th generation, 4G) communication system (for example, a long-term evolution (long-term evolution, LTE) system), a 5th generation (5th generation, 5G) communication system, a worldwide interoperability for microwave access (worldwide interoperability for microwave access, WiMAX) system, a wireless local area network (wireless local area network, WLAN) system, a system integrating a plurality of systems, or a future communication system, for example, a 6th generation (6th generation, 6G) communication system. The 5G communication system may also be referred to as a new radio (new radio, NR) system.

A network element in a communication system may send a signal to another network element or receive a signal from another network element. The signal may include information, signaling, data, or the like. The network element may alternatively be replaced with an entity, a network entity, a device, a terminal device, a communication module, a node, a communication node, or the like. In this application, the network element is used as an example for description. For example, the communication system may include at least one terminal device and at least one access network device. An access network device may send a downlink signal to a terminal device, and/or a terminal device may send an uplink signal to an access network device. In addition, it may be understood that, if the communication system includes a plurality of terminal devices, the plurality of terminal devices may also send signals to each other. In other words, both a signal sending network element and a signal receiving network element may be terminal devices.

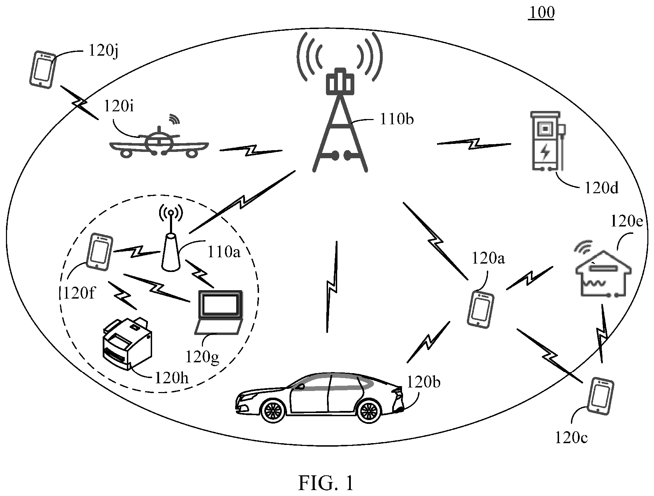

A communication method provided in embodiments of this application may be applied to a wireless communication system like 5G, 6G, or satellite communication. Refer to FIG. 1. FIG. 1 is a diagram of an architecture of a communication system according to an embodiment of this application. As shown in FIG. 1, the communication system includes a radio access network 100. The radio access network 100 may be a next generation (for example, 6G or higher-version) radio access network, or a conventional (for example, 5G or 4G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 1 is merely a diagram. The communication system may further include another device, for example, may further include a core network device, a wireless relay device, and/or a wireless backhaul device, which are not shown in FIG. 1.

Optionally, in actual application, the wireless communication system may include a plurality of network devices (also referred to as access network devices) or may include a plurality of terminal devices. One network device may serve one or more terminal devices. One terminal device may also access one or more network devices. Quantities of terminal devices and network devices that are included in the wireless communication system are not limited in embodiments of this application.

The network device may be an entity that is configured to transmit or receive a signal on a network side. The network device may be an access device via which the terminal device accesses the wireless communication system in a wireless manner. For example, the network device may be a base station. The base station may cover various names in a broad sense, or may be replaced with the following names, for example, a radio access network (radio access network, RAN) node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission and reception point (transmission and reception point, TRP), a transmitting point (transmitting point, TP), a master station (master eNodeB, MeNB), a secondary station (secondary eNodeB, SeNB), a multi-standard radio (multi-standard radio, MSR) node, a home base station, a network controller, an access node, a radio node, an access point (access point, AP), a transmitting node, a transceiver node, a baseband unit (baseband unit, BBU), a radio remote unit (remote radio unit, RRU), an active antenna unit (active antenna unit, AAU), a radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (device-to-device, D2D) communication, vehicle-to-everything (vehicle-to-everything, V2X) communication, and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used by the network device are not limited in embodiments of this application.

The network device may be fixed or mobile. For example, base stations 110a and 110b are stationary, and are responsible for wireless transmission and reception in one or more cells from the terminal device 120. A helicopter or an uncrewed aerial vehicle 120i shown in FIG. 1 may serve as a mobile base station, and one or more cells may move based on a location of the mobile base station 120i. In another example, the helicopter or the uncrewed aerial vehicle (120i) may serve as a terminal device communicating with the base station 110b.

In this application, a communication apparatus configured to implement a function of the access network may be an access network device, a network device having a part of functions of the access network, or an apparatus that can support implementation of the function of the access network, for example, a chip system, a hardware circuit, a software module, or a hardware circuit plus a software module. The apparatus may be mounted in the access network device or used together with the access network device. In the method in this application, an example in which the communication apparatus configured to implement the function of the access network device is an access network device is used for description.

The terminal device may be an entity that is on a user side and that is configured to receive or transmit a signal, for example, a mobile phone. The terminal device may be configured to connect a person, an object, and a machine. The terminal device may communicate with one or more core networks via a network device. The terminal device includes a handheld device having a wireless connection function, another processing unit connected to a wireless modem, a vehicle-mounted device, and the like. The terminal device may be a portable, pocket-sized, handheld, computer built-in, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the terminal device 120 are a user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, a flight, a ship, a remote control device, a smart home device, an industrial device, a personal communications service (personal communications service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device, for example, a smartwatch, a VR device, an AR device, a wireless terminal in industrial control (industrial control), a terminal in an internet of vehicles system, a wireless terminal in self-driving (self-driving), a wireless terminal in a smart grid (smart grid), a wireless terminal in transportation security (transportation safety), a wireless terminal in a smart city (smart city), for example, a smart fuel dispenser, a terminal device on a high-speed train, and a wireless terminal in smart home (smart home), for example, a smart speaker, a smart coffee machine, or a smart printer. The terminal device 120 may be a wireless device in the foregoing scenarios or an apparatus configured to be disposed in the wireless device, for example, a communication module, a modem, or a chip in the foregoing device. The terminal device may also be referred to as a terminal, a terminal device, a user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device or a general-purpose device. A specific technology and a specific device form that are used by the terminal device are not limited in embodiments of this application.

Optionally, the terminal device may serve as a base station. For example, the UE may serve as a scheduling entity that provides a sidelink signal between UEs in V2X, D2D, P2P, or the like. As shown in FIG. 1, a cellular phone 120a and a car 120b communicate with each other via sidelink signals. The cellular phone 120a communicates with a smart home device 120e without relaying a communication signal via the base station 110b.

In this application, the communication apparatus configured to implement the functions of the terminal device may be a terminal device, or may be a terminal device having some functions of the terminal device, or may be an apparatus, for example, a chip system, that can support implementation of the functions of the terminal device. The apparatus may be installed in the terminal device or used in a matching manner with the terminal device. In this application, the chip system may include a chip, or may include the chip and another discrete component. In the technical solutions provided in this application, an example in which the communication apparatus is a terminal device or a UE is used for description.

Optionally, the wireless communication system usually includes a cell, the base station provides cell management, and the base station provides a communication service for a plurality of mobile stations (mobile station, MS) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio unit, for example, included in an RRU, an AAU, or an RRH.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of the software module and the hardware module.

It should be understood that quantities and types of devices in the communication system shown in FIG. 1 are merely used as an example. This application is not limited thereto. In actual application, the communication system may further include more terminal devices and more access network devices, and may further include another network element, for example, may include a core network device and/or a network element configured to implement an artificial intelligence function.

It may be understood that all or some of functions implemented by one or more of the terminal device, the access network device, the core network device, or the network element configured to implement the artificial intelligence function may be virtualized, to be specific, implemented by one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

For the problem raised in the background, this application provides a communication solution, to implement automatic re-clustering and self-organized distributed networking, thereby improving networking flexibility. This solution may be referred to as a cloud multi-input and multi-output (cloud multi-input and multi-output, Cloud MIMO) solution.

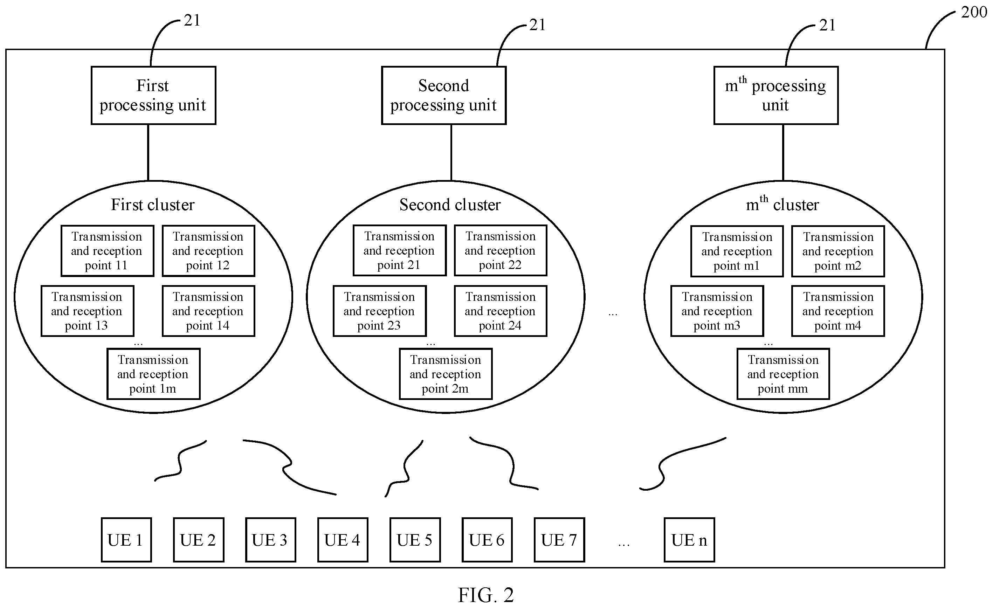

FIG. 2 is a diagram of an architecture of another communication system according to an embodiment of this application. The communication system 200 may include a plurality of processing units (m processing units are shown in the figure) 21, a plurality of transmission and reception points, and a plurality of UEs (n UEs are shown in the figure), where m and n are positive integers. A plurality of transmission and reception points are allocated to a plurality of clusters based on locations, network performance, and the like. Each cluster includes one or more transmission and reception points. One processing unit is configured to manage one or more clusters (in the figure, an example in which one processing unit is configured to manage one cluster is used). In FIG. 2, for example, transmission and reception points 11 to 1m are allocated to a first cluster, and the first cluster is managed by a first processing unit; and transmission and reception points 21 to 2m are allocated to a second cluster, and the second cluster is managed by a second processing unit. By analogy, transmission and reception points m1 to mm are allocated to an m^{th} cluster, and the m^{th} cluster is managed by an m^{th} processing unit. Each transmission and reception point may serve one or more UEs, and one UE may be served by one or more transmission and reception points in the cluster.

For example, the processing unit may be a base station, a chip in a DU, a DU, or a CU. A form of the processing unit is not limited in this application. The processing units are connected to each other by using a circuit or an optical fiber. The processing units may exchange received data or processed data with each other by using the circuit or the optical fiber. The processing unit may include one or more entities, and is responsible for basic communication and computing functions, that is, responsible for processing data reported by a transmission and reception point in a cluster managed by the processing unit, and transmitting a processing result to the transmission and reception point. In addition to the basic communication and computing functions, in this application, the processing unit may further allocate transmission and reception points to different clusters based on at least one piece of network status information reported by the transmission and reception points, and reallocate the transmission and reception points when the at least one piece of network status information is updated, so as to better serve a user and achieve better network performance. For example, the at least one piece of network status information includes: a quantity of terminal devices served by the transmission and reception point, channel quality of a channel between the transmission and reception point and the terminal device served by the transmission and reception point, and a communication rate between the transmission and reception point and the terminal device served by the transmission and reception point.

For example, the transmission and reception point includes a transmit/receive antenna, an internal processing circuit, and a program, and is connected to each processing unit in a wired manner (for example, an optical fiber). The transmission and reception point may be a TRP (only performing signal transmission), an AAU, an RRU, or the like. A form of the transmission and reception point is not limited in this application. Based on the foregoing system, the following describes in detail the method provided in embodiments of this application.

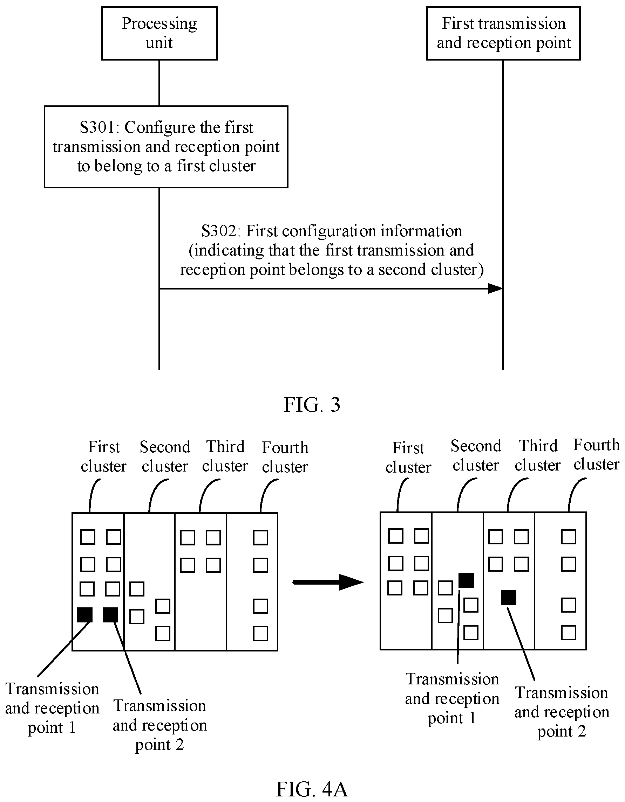

FIG. 3 is a schematic flowchart of a communication method according to an embodiment of this application. For example, the method may include the following steps.

S301: A processing unit configures a first transmission and reception point to belong to a first cluster.

During initial configuration, the processing unit configures the first transmission and reception point to belong to the first cluster. The processing unit is responsible for managing one or more first transmission and reception points in the first cluster. The first transmission and reception point is any one of the plurality of first transmission and reception points managed by the processing unit. For example, the processing unit may further notify another processing unit of the configuration.

For example, the processing unit may send configuration information, to indicate that the first transmission and reception point belongs to the first cluster. Alternatively, the configuration may be configured before delivery.

After the first transmission and reception point is configured to belong to the first cluster, the first transmission and reception point communicates with the at least one terminal device served by the first transmission and reception point, including uplink and/or downlink communication.

Specifically, in a possible implementation, in an uplink communication process, the first transmission and reception point receives uplink data from the at least one terminal device, and aggregates the received uplink data to the processing unit via an optical fiber or the like, and the processing unit performs unified processing on the uplink data. In a downlink communication process, the processing unit may process to-be-transmitted downlink data, and send the processed downlink data to the first transmission and reception point via an optical fiber or the like, and the first transmission and reception point sends the downlink data to a corresponding terminal device.

In this communication process, the first transmission and reception point may further receive network status information sent by the terminal device served by the first transmission and reception point, or may monitor network status information of the terminal device served by the first transmission and reception point. The first transmission and reception point may report the obtained network status information to the processing unit. For example, a process of obtaining the network status information may be periodic, or may be triggered by an event. For example, the terminal device detects that a network status of the terminal device is poor, and reports the network status information to the first transmission and reception point. For example, the network status information includes at least one of the following: a quantity of terminal devices in the first cluster that are served by the transmission and reception point, channel quality of a channel between the transmission and reception point and the terminal device that is in the first cluster and that is served by the transmission and reception point, and a communication rate between the transmission and reception point and the terminal device that is in the first cluster and that is served by the transmission and reception point. The channel quality may include a rank indicator (rank indicator, RI), a channel quality indicator (channel quality indicator, CQI), and a precoding matrix indicator (precoding matrix indicator, PMI). The RI is used to determine a quantity of streams for transmitting data to the terminal device. The CQI is used to determine a modulation order and a channel coding bit rate for transmitting data to the terminal device. The PMI is used to determine precoding for transmitting data to the terminal device. The foregoing description is applicable to descriptions of other embodiments in this specification. Details are not described again.

The communication system includes a plurality of clusters. Communication resources are generally fixed, and a specific communication resource is allocated to a cluster based on cluster allocation. If a service volume between a transmission and reception point and a terminal device in a specific cluster is large, a communication resource initially allocated to the cluster may not meet a service requirement of the cluster, and consequently, network performance of the transmission and reception point and the terminal device deteriorates. However, if service volumes between transmission and reception points and terminal devices in some clusters are small, there are remaining communication resources initially allocated to these clusters. After receiving the network status information, the processing unit in the first cluster may determine, based on the network status information, whether to perform re-clustering. The processing unit determines, after determining, based on the network status information, that a current network status deteriorates or the network performance does not meet an expectation, to perform re-clustering. Re-clustering helps improve network performance (for example, an overall communication rate is increased). This clustering process has little impact on services.

S302: The processing unit sends first configuration information to the first transmission and reception point.

Correspondingly, the first transmission and reception point receives the first configuration information.

After determining that re-clustering is required, the processing unit allocates a computing resource and a storage resource for clustering adjustment to be performed by the processing unit, establishes a processing task, and prepares for clustering computation. For example, the processing unit may execute a clustering optimization program with an objective of "better network performance", and may obtain a clustering result through computation by using a clustering algorithm.

The processing unit may convert the clustering result obtained through computation into an adjustment instruction, that is, the first configuration information, where the first configuration information indicates that the first transmission and reception point belongs to a second cluster. The processing unit transmits the first configuration information to the first transmission and reception point, to indicate the first transmission and reception point to form a new clustering relationship based on the first configuration information, and complete the clustering adjustment. After the first transmission and reception point receives the first configuration information, because the first configuration information is used to allocate the first transmission and reception point to the second cluster, subsequently received communication data and network status information are sent to a processing unit in the second cluster for processing.

FIG. 4A is a diagram of an example of re-clustering according to an embodiment of this application. During initial configuration, four clusters are obtained through allocation, and each cluster includes one or more transmission and reception points. The four clusters may be managed by one or more processing units. In FIG. 4A, a first cluster includes more transmission and reception points than other clusters. After receiving network status information sent by these transmission and reception points, a processing unit in the first cluster determines that: A quantity of terminal devices served by a transmission and reception point 1 and a transmission and reception point 2 in the first cluster is greater than a threshold, or channel quality of a channel between a transmission and reception point 1 and a terminal device served by the transmission and reception point 1 and channel quality of a channel between a transmission and reception point 2 and a terminal device served by the transmission and reception point 2 are poor, or a communication rate between a transmission and reception point 1 and a terminal device served by the transmission and reception point 1 and a communication rate between a transmission and reception point 2 and a terminal device served by the transmission and reception point 2 are low. Therefore, the processing unit in the first cluster determines to perform re-clustering on the transmission and reception point 1 and the transmission and reception point 2, and allocate the transmission and reception point 1 to a second cluster and the transmission and reception point 2 to a third cluster. It should be understood that, in FIG. 4A, a change in the clusters to which the transmission and reception point 1 and the transmission and reception point 2 belong does not emphasize a change in physical locations of the two transmission and reception points.

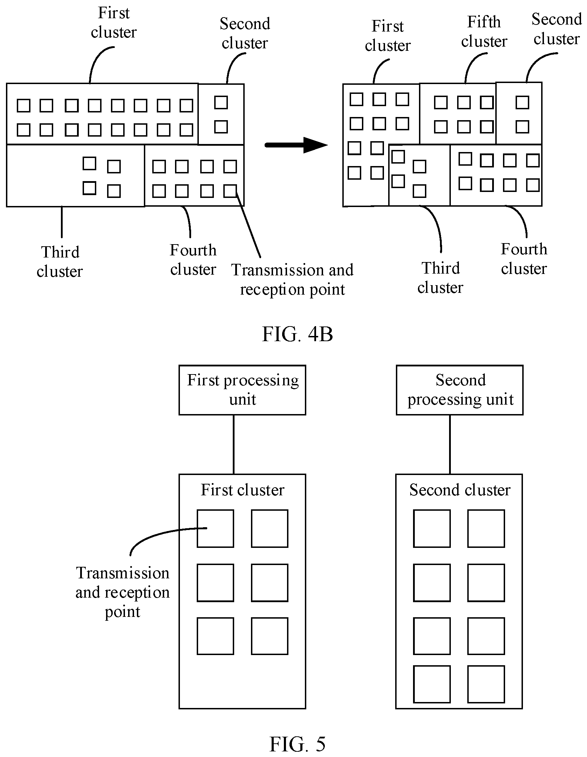

FIG. 4B is a diagram of another example of re-clustering according to an embodiment of this application. During initial configuration, four clusters are obtained through allocation, and each cluster includes one or more transmission and reception points. The four clusters may be managed by one or more processing units. In FIG. 4B, a first cluster includes more transmission and reception points than other clusters, and a processing unit in the first cluster has heavy load. Therefore, a fifth cluster may also be added, and some transmission and reception points in the first cluster are allocated to the fifth cluster, and a processing unit of the fifth cluster is responsible for managing the transmission and reception points that are allocated to the fifth cluster.

This embodiment is described by using an example in which one processing unit is responsible for managing one cluster (namely, the first cluster). In another embodiment, the processing unit may be responsible for managing a plurality of clusters. When one processing unit is configured to manage a plurality of clusters, services related to the plurality of clusters are all processed internally by the processing unit. The cluster, the transmission and reception point, and a UE each have a corresponding identifier. The processing unit establishes a mapping relationship between the transmission and reception point in each cluster and the UE. Therefore, when receiving a service related to any cluster, the processing unit may perform corresponding processing.

For example, the first cluster and the second cluster may be managed by a same processing unit, or may be managed by different processing units. When the first cluster and the second cluster are managed by a same processing unit, the processing unit determines a clustering result, and sends the clustering result to a first transmission and reception point. When the first cluster and the second cluster are managed by different processing units, a processing unit corresponding to the first cluster may forward received network status information to a processing unit corresponding to the second cluster, and the processing unit corresponding to the second cluster determines a clustering result, and sends the clustering result to the first transmission and reception point. Alternatively, the processing unit corresponding to the first cluster may determine the clustering result based on the received network status information, and notify the processing unit corresponding to the second cluster of the clustering result, and the processing unit corresponding to the second cluster sends the clustering result to the first transmission and reception point.

For example, the solutions of this application may be applied to a scenario in which there is a communication requirement indoors. An industrial manufacturing factory is used as an example. For example, there is a requirement for uplink video backhaul of a large quantity of video surveillance cameras (a type of terminal device), and a single camera has an uplink bandwidth requirement of several megabytes to a dozen megabytes based on different bit rates. For another example, an uplink bandwidth requirement of a single user of an artificial intelligence (artificial intelligence, AI) quality inspection camera (a type of terminal device) on a production line may reach hundreds of megabytes. FIG. 5 is a diagram of an architecture of a communication system in a scenario according to an embodiment of this application. A plurality of transmission and reception points may be disposed in different areas in an industrial manufacturing factory. Each area includes a plurality of transmission and reception points. The plurality of transmission and reception points in the area may be disposed at a specific interval. Each transmission and reception point is responsible for receiving data transmitted by a camera near the transmission and reception point. The processing unit may consider the area as a cluster. FIG. 5 shows two clusters as an example, where a first cluster is managed by a first processing unit, and a second cluster is managed by a second processing unit. Each cluster includes one or more transmission and reception points. One or more transmission and reception points in each cluster are connected to each other, and one or more transmission and reception points in each cluster are connected to a processing unit that manages the cluster. The processing units in the clusters may also be connected to each other, and one or more transmission and reception points in each cluster may be further connected to a processing unit of another cluster. However, a workshop may adjust a production line layout based on a production order, and service distribution changes accordingly. Therefore, locations and/or a quantity of the video surveillance cameras or AI quality inspection cameras may change. In this case, a communication network is required to have a self-planning capability to adapt to adjustment of service requirements. Based on the solution provided in this embodiment, re-clustering may be performed to ensure network performance.

According to the communication method provided in this embodiment of this application, the processing unit may perform automatic re-clustering, to implement self-organizing distributed networking, thereby improving networking flexibility. In addition, in this embodiment, a quantity and a scale of clusters, and a cluster to which each transmission and reception point is allocated to serve the terminal device are determined by the processing unit and are flexible and dynamic. However, in an existing networking solution, a connection relationship of each transmission and reception point is determined at the beginning of cluster establishment, and remains unchanged in subsequent running. If the connection relationship needs to be changed, a service of the transmission and reception point needs to be stopped and a network needs to be manually re-deployed. In contrast, in the solution of this embodiment, because a physical connection relationship between each transmission and reception point and each processing unit is established in advance, an allocation relationship between a transmission and reception point and a cluster can be adjusted and self-organized online based on service load and a channel status of the terminal device when impact on a cell service is small, so as to ensure that overall network performance is stable and optimal, and improve networking flexibility. In this embodiment, a delay of switching between different clusters by the transmission and reception point can be reduced, service continuity can be ensured, and switching-free experience can be achieved.

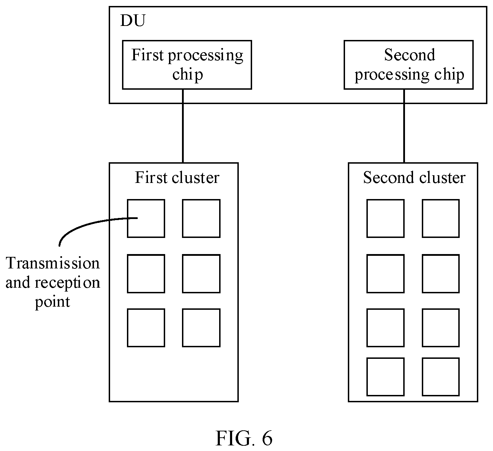

In a communication scenario, the processing unit may be a processing chip or a processing circuit in a DU. FIG. 6 is a diagram of still another communication system according to an embodiment of this application. The system includes a DU (FIG. 6 shows that the DU includes two processing chips: a first processing chip and a second processing chip) and a plurality of first transmission and reception points. Each processing chip manages one or more clusters, each cluster includes one or more first transmission and reception points, and each processing chip is connected to one or more first transmission and reception points in a cluster corresponding to the processing chip via an optical fiber/connector. A plurality of processing chips are electrically connected.

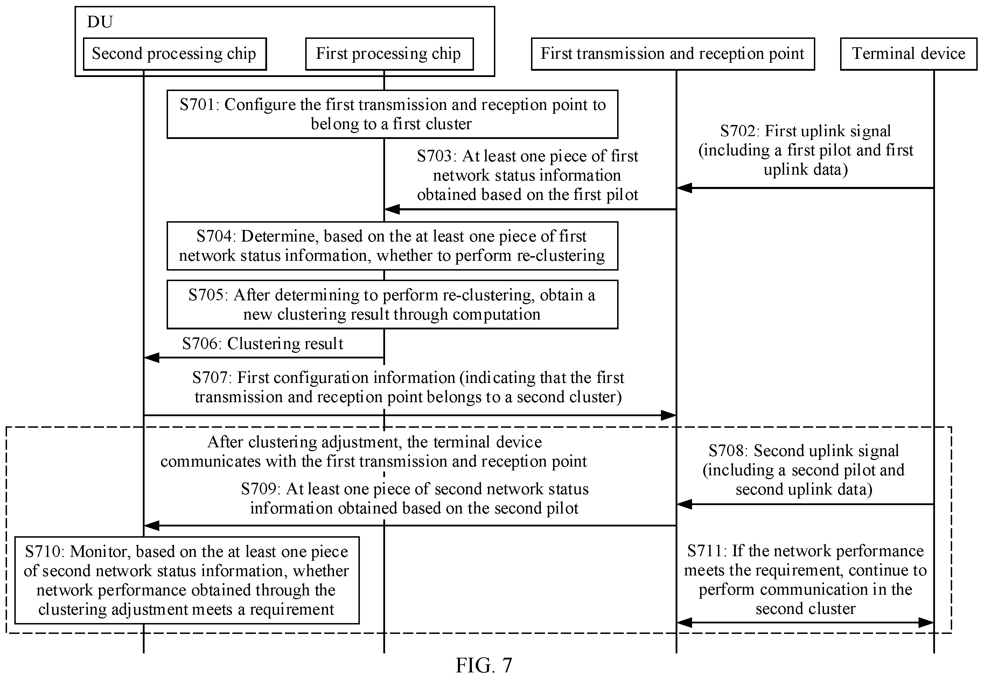

FIG. 7 is a schematic flowchart of a communication method based on the communication system shown in FIG. 6 according to an embodiment of this application. For example, the communication method may include the following steps.

S701: A first processing chip configures a first transmission and reception point to belong to a first cluster.

The first processing chip is a specific example of the processing unit in the embodiment shown in FIG. 3. For specific implementation of this step, refer to step S301 in the embodiment shown in FIG. 3.

During initial configuration, the first processing chip configures the first transmission and reception point to belong to the first cluster. The first processing chip is responsible for managing one or more first transmission and reception points in the first cluster. The first transmission and reception point is any one of the plurality of first transmission and reception points managed by the first processing chip.

For example, the first processing chip may further notify a second processing chip of the configuration. The first processing chip and the second processing chip are processing chips in the DU.

For example, the first processing chip may send configuration information, to indicate that the first transmission and reception point belongs to the first cluster. Alternatively, the configuration may be configured before delivery.

S702: A terminal device communicates with the first transmission and reception point. For example, the terminal device sends a first uplink signal to the first transmission and reception point, where the first uplink signal includes a first pilot and first uplink data.

This step is a further supplementary operation based on the embodiment shown in FIG. 3.

After receiving the first uplink signal, the first transmission and reception point parses the first uplink signal to obtain the first pilot and the first uplink data, sends the first uplink data to the first processing chip for processing, and obtains at least one of the following first network status information based on the first pilot: channel quality of a channel between the first transmission and reception point and a terminal device that is in the first cluster and that is served by the first transmission and reception point, and a communication rate between the first transmission and reception point and the terminal device that is in the first cluster and that is served by the first transmission and reception point.

For example, the first pilot may be a sounding reference signal (sounding reference signal, SRS). The first transmission and reception point receives the first pilot, and measures the first pilot to obtain channel quality of an uplink channel between the first transmission and reception point and the terminal device that is in the first cluster and that is served by the first transmission and reception point. For a time division duplexing (time division duplexing, TDD) system, uplink and downlink channels are reciprocal, and the first transmission and reception point may obtain channel quality of a downlink channel based on the channel quality of the uplink channel.

For example, the first transmission and reception point may further send a downlink reference signal to the terminal device served by the first transmission and reception point. The terminal device measures the downlink reference signal to obtain the channel quality of the downlink channel, and returns the channel quality to the first transmission and reception point.

For example, the communication rate between the first transmission and reception point and the terminal device that is in the first cluster and that is served by the first transmission and reception point may be reported by the terminal device after measurement, or may be obtained by the first transmission and reception point through monitoring.

In addition, because the first transmission and reception point serves the terminal device, the first transmission and reception point may further obtain a quantity of terminal devices in the first cluster that are served by the first transmission and reception point.

S703: The first transmission and reception point reports, to the first processing chip, the at least one piece of first network status information obtained based on the first pilot. Correspondingly, the first processing chip receives the at least one piece of first network status information.

This step is a further supplementary operation based on the embodiment shown in FIG. 3.

For example, the first transmission and reception point may report the at least one piece of first network status information to the first processing chip. The reporting may be periodic, or may be performed after abnormal network status information is received.

S704: The first processing chip determines, based on the at least one piece of first network status information, whether to perform re-clustering.

This step is a further supplementary operation based on the embodiment shown in FIG. 3.

After receiving the at least one piece of network status information and first data, the first processing chip provides a communication service function for the terminal device, and may determine, based on the received at least one piece of first network status information, whether to perform re-clustering. If the first processing chip determines that a current network status deteriorates or does not meet an expectation, and it helps improve network performance (for example, an overall communication rate is improved) after re-clustering is performed, the first processing chip starts clustering adjustment. This clustering process has little impact on a communication procedure.

S705: After determining to perform re-clustering, the first processing chip obtains a new clustering result through computation.

This step is a further supplementary operation based on the embodiment shown in FIG. 3.

After determining that re-clustering is required, the first processing chip allocates a computing resource and a storage resource for the clustering adjustment to be performed by the first processing chip, establishes a processing task, and prepares for clustering computation.

For example, the first processing chip may execute a clustering optimization program with an objective of "better network performance", and may obtain a clustering result through computation by using a clustering algorithm.

The clustering adjustment may be implemented in the following several manners, but this application is not limited thereto.

In a possible implementation, if the first processing chip receives the quantity of terminal devices in the first cluster that are served by the first transmission and reception point in step S703, and the quantity of terminal devices in the first cluster that are served by the first transmission and reception point is greater than or equal to a first threshold, the quantity of terminal devices in the first cluster that are served by the first transmission and reception point is excessively large, that is, load of the first transmission and reception point is excessively large. The first processing chip is responsible for performing an operation on data received by the first transmission and reception point, and the like, but a computing resource of each first processing chip are fixed. Therefore, a response speed is affected. In addition, the communication system allocates a specific communication resource to each cluster. Because the load of the first transmission and reception point is excessively large, the communication resource allocated by the first processing chip to the first transmission and reception point may not meet a communication requirement between the first transmission and reception point and the terminal device served by the first transmission and reception point. Therefore, it is determined that re-clustering is performed. Before performing clustering, the first processing chip may obtain information about another cluster, and learn that a quantity of terminal devices in a second cluster is less than or equal to a second threshold, and that there may be a remaining communication resource allocated by the second processing chip to each transmission reception point in the second cluster. In this case, the first processing chip configures the first transmission and reception point to belong to the second cluster. After the first transmission and reception point is allocated to the second cluster, the second processing chip may allocate a communication resource to the newly added first transmission and reception point. After the clustering adjustment is performed, the quantity of terminal devices in the second cluster that are served by the first transmission and reception point is less than or equal to the second threshold, so that a response speed of the first transmission and reception point to the terminal device can be improved, and network performance of the first transmission and reception point and the terminal device served by the first transmission and reception point can be improved. The second threshold is less than the first threshold. In this implementation, when the first transmission and reception point belongs to the first cluster, load of the first transmission and reception point is excessively heavy, and a communication resource allocated by the first processing chip to the first transmission and reception point may not meet a communication requirement between the first transmission and reception point and the terminal device served by the first transmission and reception point, the first transmission and reception point is allocated to the second cluster, and the second cluster may allocate sufficient communication resources to the first transmission and reception point, so as to improve network performance of the first transmission and reception point and the terminal device served by the first transmission and reception point.

In another possible implementation, the first transmission and reception point not only measures the channel quality of the channel between the first transmission and reception point and the terminal device that is served by the first transmission and reception point and that is in the current cluster (the first cluster) in which the first transmission and reception point is located, but also measures channel quality of a channel between the first transmission and reception point and a terminal device in another cluster. If the first processing chip receives the channel quality of the channel between the first transmission and reception point and the terminal device that is in the first cluster and that is served by the first transmission and reception point in step S703, and the channel quality is less than or equal to a third threshold, the first processing chip determines to perform clustering adjustment. A possible reason for the poor channel quality may be that the first processing chip allocates a small quantity of communication resources to the first transmission and reception point, or the terminal device in the first cluster moves and is far away from the first transmission and reception point. The first processing chip may obtain information like a remaining status of a communication resource of another cluster (for example, a second cluster) and channel quality of a channel between the first transmission and reception point and a terminal device in the second cluster, and learn that the channel quality of the channel between the first transmission and reception point and the terminal device in the second cluster is greater than or equal to a fourth threshold, where the fourth threshold is greater than the third threshold. In this case, the first processing chip performs clustering adjustment, and configures the first transmission and reception point to belong to the second cluster. After the first transmission and reception point is allocated to the second cluster, the second processing chip may allocate a communication resource to the newly added first transmission and reception point. In this implementation, when the channel quality of the channel between the first transmission and reception point and the terminal device that is served by the first transmission and reception point and that is in the cluster in which the first transmission and reception point is currently located is poor, clustering adjustment is performed based on channel quality of channels between the first transmission and reception point and the terminal devices in different clusters, so that the first transmission and reception point can better serve the terminal device, thereby improving communication reliability.

In another possible implementation, if the first processing chip receives the communication rate between the first transmission and reception point and the terminal device that is in the first cluster and that is served by the first transmission and reception point in step S703, and the communication rate is less than or equal to a fifth threshold, the first processing chip determines to perform clustering adjustment. A possible reason for the low communication rate may be that the first processing chip allocates a small quantity of communication resources to the first transmission and reception point, or the terminal device in the first cluster moves and is far away from the first transmission and reception point. The first processing chip may obtain a remaining status of a communication resource of another cluster (for example, a second cluster), and then the first processing chip performs clustering adjustment, and configures the first transmission and reception point to belong to the second cluster. For example, the second cluster may be a cluster with the largest remaining communication resources in all clusters, or a cluster with a good communication rate between the transmission and reception point in the second cluster and the terminal device served by the transmission and reception point. After the first transmission and reception point is allocated to the second cluster, the second processing chip may allocate a communication resource to the newly added first transmission and reception point. After the first transmission and reception point is allocated to the second cluster, a communication rate between the first transmission and reception point and the terminal device that is in the second cluster and that is served by the first transmission and reception point is improved. For example, the communication rate between the first transmission and reception point and the terminal device that is in the second cluster and that is served by the first transmission and reception point is greater than or equal to a sixth threshold, where the sixth threshold is greater than the fifth threshold. In this implementation, when the communication rate between the first transmission and reception point and the terminal device that is served by the first transmission and reception point and that is in the cluster in which the first transmission and reception point is currently located is poor, the first transmission and reception point is allocated to the second cluster. The second cluster may allocate sufficient communication resources to the first transmission and reception point, so as to increase the communication rate between the first transmission and reception point and the terminal device served by the first transmission and reception point.

For example, the first threshold to the sixth threshold may be preset in the first transmission and reception point, and the thresholds may be determined in an OAM manner, a protocol predefining manner, or another manner.

S706: The first processing chip sends a clustering result to the second processing chip. Correspondingly, the second processing chip receives the clustering result.

This step is a further supplementary operation based on the embodiment shown in FIG. 3.

The second processing chip is responsible for managing one or more transmission and reception points in the second cluster. Therefore, after determining that the first transmission and reception point is allocated to the second cluster, the first processing chip may notify the second processing chip of the clustering result.

S707: The second processing chip sends first configuration information to the first transmission and reception point. Correspondingly, the first transmission and reception point receives the first configuration information.

This step is another implementation of step S302 in the embodiment shown in FIG. 3.

The first configuration information indicates that the first transmission and reception point belongs to the second cluster.

In this step, the second processing chip may convert the clustering result obtained through computation into an adjustment instruction, that is, the first configuration information, and transmit the first configuration information to the first transmission and reception point, to indicate the first transmission and reception point to form a new clustering relationship based on the first configuration information, and complete the clustering adjustment.

Alternatively, refer to step S302 in the embodiment shown in FIG. 3. Alternatively, the first processing chip may send the first configuration information to the first transmission and reception point.

After re-clustering is performed on the first transmission and reception point, the first transmission and reception point continues to perform a communication procedure with the terminal device, including uplink and/or downlink communication. The clustering adjustment has little impact on the communication procedure.

S708: The terminal device sends a second uplink signal to the first transmission and reception point. Correspondingly, the first transmission and reception point receives the second uplink signal.

The second uplink signal includes a second pilot and second uplink data.

This step is a further supplementary operation based on the embodiment shown in FIG. 3.

S709: The first transmission and reception point reports, to the second processing chip, at least one piece of second network status information obtained based on the second pilot. Correspondingly, the second processing chip receives the at least one piece of second network status information.

After receiving the second uplink signal, the first transmission and reception point may obtain the at least one piece of second network status information based on the second pilot. For specific implementation of this step, refer to step S703. Details are not described herein again. This step is a further supplementary operation based on the embodiment shown in FIG. 3.

S710: The second processing chip monitors, based on the at least one piece of second network status information, whether the network performance obtained through the clustering adjustment meets a requirement.

After the clustering adjustment, the second processing chip performs anomaly detection within a specific time period, and determines, based on the at least one piece of second network status information reported by the first transmission and reception point, whether a change of the network performance obtained through the clustering adjustment meets an expectation, that is, whether a network performance indicator is improved as expected. If no exception occurs, it is determined that the clustering adjustment succeeds, and the network status continues to be monitored. If an exception occurs, the clustering procedure in S704 to S707 is performed.

This step is a further supplementary operation based on the embodiment shown in FIG. 3.

S711: If the network performance meets the requirement, the first transmission and reception point and the terminal device continue to communicate with each other in the second cluster.

The communication includes uplink communication and downlink communication. For uplink communication, the first transmission and reception point receives uplink data sent by the terminal device, and sends the received uplink data to the second processing chip for processing. For downlink communication, the first transmission and reception point receives downlink data processed by the second processing chip, and sends the downlink data to the terminal device.

This step is a further supplementary operation based on the embodiment shown in FIG. 3.

According to the communication method provided in this embodiment of this application, the processing chip of the DU may be responsible for cluster management, to implement automatic re-clustering and self-organizing distributed networking, thereby improving networking flexibility.

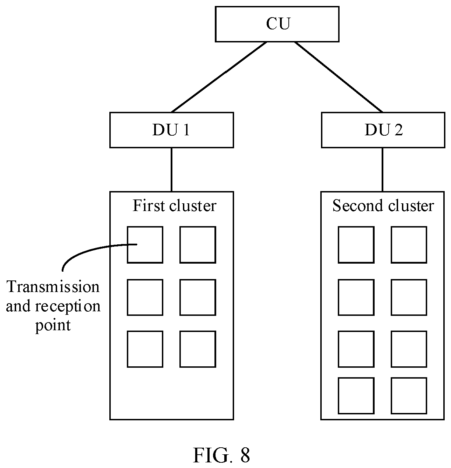

In another communication scenario, the radio access network may include a CU and a plurality of DUs, and the processing unit includes the CU and the DU. FIG. 8 is a diagram of still another communication system according to an embodiment of this application. The communication system includes a CU, a plurality of DUs (two DUs are shown in the figure: a DU 1 and a DU 2), and a plurality of first transmission and reception points. The CU may be connected to the plurality of DUs via an optical fiber or the like, and is responsible for managing the plurality of DUs. Each of the plurality of DUs manages one or more clusters, each cluster includes one or more first transmission and reception points, and each DU is connected to one or more first transmission and reception points in a cluster corresponding to the DU via an optical fiber/connector. The plurality of DUs are also connected to each other via an optical fiber/connector.

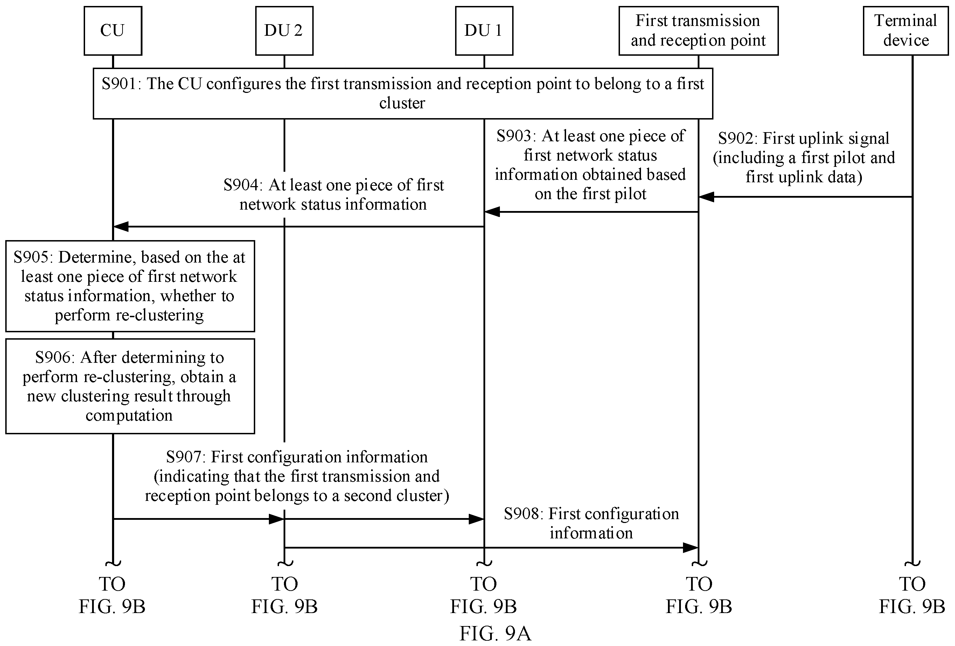

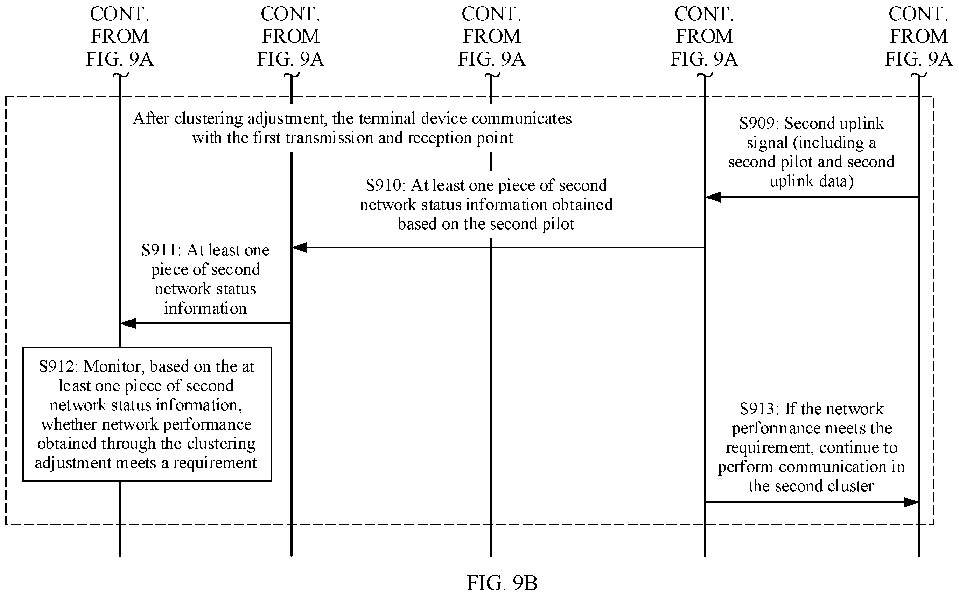

FIG. 9A and FIG. 9B are a schematic flowchart of a communication method based on the communication system shown in FIG. 8 according to an embodiment of this application. For example, the method may include the following steps.

S901: A CU configures a first transmission and reception point to belong to a first cluster.

In this embodiment, the CU is centrally responsible for clustering. The DU 1 is responsible for managing the first cluster, and the DU 2 is responsible for managing the second cluster. In this embodiment, processing operations of the processing unit in the embodiment shown in FIG. 3 are divided into two parts, where one part is performed by the CU, and the other part is performed by the DU 1 and the DU 2. The CU is centrally responsible for clustering adjustment, and the DU 1 and the DU 2 are responsible for notifying the transmission and reception point in the corresponding cluster of configuration of the CU.

During initial configuration, the CU configures the first transmission and reception point to belong to the first cluster. The first transmission and reception point is any transmission and reception point in the system.

After obtaining the configuration of the CU, the DU 1 manages the first transmission and reception point based on the configuration of the CU, including allocating a communication resource to the first transmission and reception point and the like.

For example, the CU may send configuration information to the DU 1, to indicate that the first transmission and reception point belongs to the first cluster. The DU 1 may transparently transmit the configuration information to the first transmission and reception point, or may perform adaptive processing, for example, format processing, on the configuration information at the DU 1 end and then send the configuration information to the first transmission and reception point. Alternatively, the CU and the DU 1 may be configured before delivery, and the first transmission and reception point is configured to belong to the first cluster.

S902: A terminal device communicates with the first transmission and reception point. For example, the terminal device sends a first uplink signal to the first transmission and reception point, where the first uplink signal includes a first pilot and first uplink data.

This step is a further supplementary operation based on the embodiment shown in FIG. 3. For specific implementation of this step, refer to step S702 in the embodiment shown in FIG. 7. Details are not described herein again.

S903: The first transmission and reception point reports, to the DU 1, at least one piece of first network status information obtained based on the first pilot. Correspondingly, the DU 1 receives the at least one piece of first network status information.

This step is a further supplementary operation based on the embodiment shown in FIG. 3.

For example, the first transmission and reception point may periodically report the at least one piece of first network status information to the DU, or the first transmission and reception point may report the at least one piece of first network status information to the DU after receiving abnormal network status information.

S904: The DU 1 reports the at least one piece of first network status information to the CU.

This step is a further supplementary operation based on the embodiment shown in FIG. 3.

After each DU receives the at least one piece of first network status information reported by the transmission and reception point in the cluster corresponding to the DU, the DU forwards the received at least one piece of first network status information to the CU.

S905: The CU determines, based on the at least one piece of first network status information, whether to perform re-clustering.

This step is a further supplementary operation based on the embodiment shown in FIG. 3. For specific implementation of this step, refer to step S704 in the embodiment shown in FIG. 7. A difference lies in that in this example, the CU determines whether to perform re-clustering.

S906: After determining to perform re-clustering, the CU obtains a new clustering result through computation.

This step is a further supplementary operation based on the embodiment shown in FIG. 3. For specific implementation of this step, refer to step S705 in the embodiment shown in FIG. 7. A difference lies in that in this example, the CU obtains the new clustering result through computation.

S907: The CU sends the first configuration information to the DU 2. Correspondingly, the DU 2 receives the first configuration information.

Based on the architecture of this embodiment, the CU first sends the first configuration information to the DU 2.

The first configuration information indicates that the first transmission and reception point belongs to the second cluster.

For example, the CU may further send the first configuration information to the DU 1, to notify the DU 1 that the first transmission and reception point is allocated to the second cluster.

Alternatively, the DU 2 may forward the first configuration information to the DU 1.

S908: The DU 2 forwards the first configuration information to the first transmission and reception point. Correspondingly, the first transmission and reception point receives the first configuration information.

Based on the architecture of this embodiment, after receiving the first configuration information, the DU 2 forwards the first configuration information to the first transmission and reception point.

Steps S907 and S908 are used to jointly implement step S302 in the embodiment shown in FIG. 3.

After the clustering adjustment, the first transmission and reception point communicates with the terminal device in the second cluster, including uplink and/or downlink communication.

S909: The terminal device sends a second uplink signal to the first transmission and reception point, where the second uplink signal includes a second pilot and second uplink data.

This step is a further supplementary operation based on the embodiment shown in FIG. 3.

After receiving the second uplink signal, the first transmission and reception point may obtain the at least one piece of second network status information based on the second pilot.

S910: The first transmission and reception point reports, to the DU 2, the at least one piece of second network status information obtained based on the second pilot. Correspondingly, the DU 2 receives the at least one piece of second network status information.

This step is a further supplementary operation based on the embodiment shown in FIG. 3. For specific implementation of this step, refer to step S709 in the embodiment shown in FIG. 7. Details are not described herein again.

S911: The DU 2 reports the received at least one piece of second network status information to the CU.

This step is a further supplementary operation based on the embodiment shown in FIG. 3.

S912: The CU monitors, based on the at least one piece of second network status information, whether the network performance obtained through the clustering adjustment meets a requirement.

After the clustering adjustment, the CU performs anomaly detection within a specific time period, and determines, based on the at least one piece of second network status information, whether a change of the network performance obtained through the clustering adjustment meets an expectation, that is, whether a network performance indicator is improved as expected. If no exception occurs, it is determined that the clustering adjustment succeeds, and the network status continues to be monitored. If an exception occurs, the clustering procedure in S905 to S908 is performed. This step is a further supplementary operation based on the embodiment shown in FIG. 3.

S913: If the network performance meets the requirement, the first transmission and reception point and the terminal device communicate with each other in the second cluster.

The communication includes uplink communication and downlink communication. For uplink communication, the first transmission and reception point receives uplink data sent by the terminal device, and sends the received uplink data to the DU 2 for processing. For downlink communication, the first transmission and reception point receives downlink data processed by the DU 2, and sends the downlink data to the terminal device.

This clustering process has little impact on services.

This step is a further supplementary operation based on the embodiment shown in FIG. 3.

According to the communication method provided in this embodiment of this application, after each DU receives the at least one piece of network status information reported by the at least one first transmission and reception point in the cluster managed by the DU, the DU aggregates the at least one piece of network status information to the CU, and the CU determines whether to perform re-clustering. The CU may obtain the network status information of each cluster, so that clustering adjustment can be better performed.

It may be understood that, in this application, an example in which the processing unit and the first transmission and reception point are used as execution bodies of this interaction illustration is used for description. However, the execution bodies of the interaction illustration are not limited in this application. For example, the processing unit in the method provided in this application may alternatively be a chip, a chip system, or a processor used in the processing unit, or may be a logical node, a logical module, or software that can implement all or some of the processing unit. The first transmission and reception point in the method provided in this application may alternatively be a chip, a chip system, or a processor used in the first transmission and reception point, or may be a logical node, a logical module, or software that can implement all or some of functions of the first transmission and reception point.

In this application, "sending information to (for example, the first transmission and reception point)" or a related illustration in the accompanying drawings may be understood as that a destination end of the information is the first transmission and reception point. This may include directly or indirectly sending information to the first transmission and reception point. "Receiving information from (for example, the first transmission and reception point)" or "receiving information that is from (for example, the first transmission and reception point)" or a related illustration in the accompanying drawings may be understood as that a source end of the information is the first transmission and reception point, and may include directly or indirectly receiving information from the first transmission and reception point. Information may undergo necessary processing, for example, a format change, between the source end for sending the information and the destination end. However, the destination end may understand valid information from the source end. A similar expression in this application may be understood similarly, and details are not described herein again.

It may be understood that, in the foregoing embodiments, the method and/or step implemented by the processing unit may alternatively be implemented by a component (for example, a chip or a circuit) that can be used in the processing unit. The method and/or step implemented by the first transmission and reception point may alternatively be implemented by a component (for example, a chip or a circuit) that can be used in the first transmission and reception point.

The foregoing mainly describes the solutions provided in embodiments of this application from a perspective of interaction between the devices. Correspondingly, an embodiment of this application further provides an apparatus, and the apparatus is configured to implement the foregoing methods. The apparatus may be the processing unit in the foregoing method embodiments, or may be a component that can be used in the processing unit. Alternatively, the apparatus may be the first transmission and reception point in the foregoing method embodiments, or may be a component that can be used in the first transmission and reception point. It may be understood that, to implement the foregoing functions, the apparatus includes a hardware structure and/or a software module for performing a corresponding function. A person of ordinary skill in the art should easily be aware that, in combination with the example units, algorithms, and steps described in the embodiments disclosed in this application, this application can be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the apparatus may be divided into functional modules based on the foregoing method embodiment. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. In actual implementation, another division manner may be used.

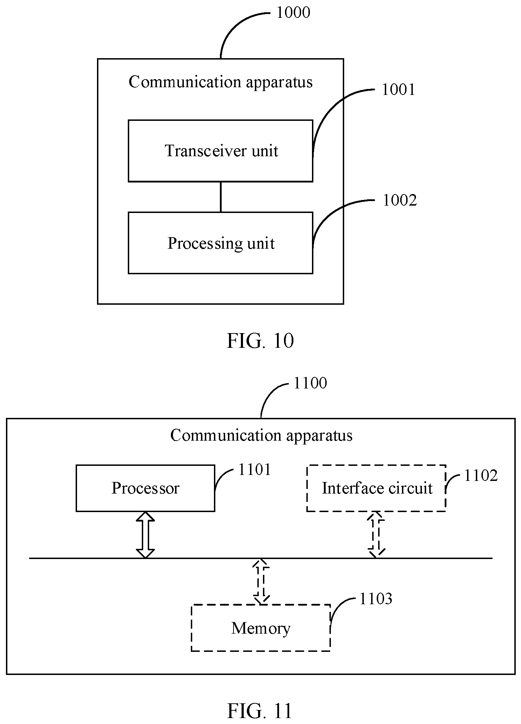

FIG. 10 is a diagram of a structure of an apparatus according to an embodiment of this application. The apparatus 1000 includes a transceiver unit 1001 and a processing unit 1002.

When the apparatus is configured to implement the functions of the first transmission and reception point in the foregoing method embodiments, the transceiver unit 1001 is configured to perform the operations of the first transmission and reception point in step S302 in the embodiment shown in FIG. 3, and the processing unit 1002 is configured to perform step S301 in the embodiment shown in FIG. 3. Alternatively, the transceiver unit 1001 is configured to perform the operations of the first transmission and reception point in S702, S703, S707 to S709, and S711 in the embodiment shown in FIG. 7. Alternatively, the transceiver unit 1001 is configured to perform the operations of the first transmission and reception point in S902, S903, S908 to S910, and S913 in the embodiment shown in FIG. 9A and FIG. 9B.

When the apparatus is configured to implement the functions of the processing unit in the foregoing method embodiments, the transceiver unit 1001 is configured to perform the operations of the processing unit in S302 in the embodiment shown in FIG. 3. Alternatively, the transceiver unit 1001 is configured to perform the operations of the first processing chip and the second processing chip in S703, S706, S707, and S709 in the embodiment shown in FIG. 7, and the processing unit 1002 is configured to perform the operations of S701, S704, S705, and S710 in the embodiment shown in FIG. 7. Alternatively, the transceiver unit 1001 is configured to perform operations of the CU, the DU 1, and the DU 2 in S903, S904, and S907 to S911 in the embodiment shown in FIG. 9A and FIG. 9B, and the processing unit 1002 is configured to perform operations of S901, S905, S906, and S912 in the embodiment shown in FIG. 9A and FIG. 9B.

For specific implementations of the transceiver unit 1001 and the processing unit 1002, refer to the descriptions in the foregoing method embodiments.

FIG. 11 is a diagram of a structure of another apparatus according to an embodiment of this application. The apparatus 1100 includes one or more processors 1101 (one processor is used as an example in the figure). Optionally, the apparatus 1100 may further include a memory 1103 (represented by dashed lines in the figure). The memory 1103 is configured to: store instructions executed by the processor 1101, store input data needed by the processor 1101 to run instructions, or store data generated by running instructions by the processor 1101. Optionally, the apparatus 1100 may further include an interface circuit 1102 (represented by dashed lines in the figure). The processor 1101 and the interface circuit 1102 are coupled to each other. It may be understood that, the interface circuit 1102 may be a transceiver or an input/output interface. The processor 1101 is configured to implement a function of the processing unit 1002 in the embodiment shown in FIG. 10, and the interface circuit 1102 is configured to implement a function of the transceiver unit 1001 in the embodiment shown in FIG. 10.

When the apparatus is a chip used in the processing unit, the chip implements a function of the processing unit in the foregoing method embodiments. The chip receives information from another module (for example, a radio frequency module or an antenna) in the processing unit, where the information is sent by a first transmission and reception point to the processing unit; or the chip sends information to another module (for example, a radio frequency module or an antenna) in the processing unit, where the information is sent by the processing unit to a first transmission and reception point.

When the apparatus is a chip used in the first transmission and reception point, the chip implements the functions of the first transmission and reception point in the foregoing method embodiments. The chip receives information from another module (for example, a radio frequency module or an antenna) in the first transmission and reception point, where the information is sent by the processing unit to the first transmission and reception point. Alternatively, the chip sends information to another module (for example, a radio frequency module or an antenna) in the first transmission and reception point, where the information is sent by the first transmission and reception point to the processing unit.

In addition, it should be noted that the transceiver unit and/or the processing unit may be implemented via a virtual module. For example, the processing unit may be implemented via a software functional unit or a virtual apparatus, and the transceiver unit may be implemented via a software function or a virtual apparatus. Alternatively, the processing unit or the transceiver unit may be implemented via a physical apparatus. For example, if the apparatus is implemented via a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

Division into the modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is enabled to perform the method in the foregoing embodiments.

An embodiment of this application further provides a system, including the foregoing apparatus.

An embodiment of this application further provides a circuit. The circuit is coupled to a memory. The circuit is configured to perform the methods shown in the foregoing embodiments. The circuit may include a chip circuit.

It should be noted that the foregoing units or one or more of the foregoing units may be implemented by software, hardware, or a combination of software and hardware. When any one unit or units are implemented by software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, a discrete hardware component, or all or some of circuits in the foregoing device that are configured to implement a processing function, and may implement or perform the methods, steps, and logical block diagrams disclosed in this application. The general-purpose processor may be a microprocessor or any regular processor or the like. The steps of the methods disclosed with reference to this application may be directly implemented by a hardware processor, or may be implemented by a combination of hardware and a software module in a processor.

When the foregoing units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include the chip and another discrete device. This is not specifically limited in embodiments of this application.

The memory in this application may alternatively be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality of items. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, without a logical contradiction, mutual reference can be made between examples. For example, mutual reference can be made between methods and/or terms in the method embodiments, mutual reference can be made between functions and/or terms in the apparatus embodiments, and mutual reference can be made between functions and/or terms in the apparatus examples and the method examples.

## Claims

1. A communication method, wherein the method comprises:
configuring a first transmission and reception point to belong to a first cluster; and
sending first configuration information, wherein the first configuration information indicates that the first transmission and reception point belongs to a second cluster.

2. The method according to claim 1, wherein before sending the first configuration information, the method further comprises:
receiving, from the first transmission and reception point, at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point.

3. The method according to claim 2, wherein sending the first configuration information comprises:
if the quantity of terminal devices in the first cluster that are served by the first transmission and reception point is received, and the quantity of terminal devices in the first cluster that are served by the first transmission and reception point is greater than or equal to a first threshold, sending the first configuration information, wherein a quantity of terminal devices in the second cluster that are served by the first transmission and reception point is less than or equal to a second threshold, and the second threshold is less than the first threshold.

4. The method according to claim 2, wherein sending the first configuration information comprises:
if the channel quality of the channel between the first transmission and reception point and the terminal device that is in the first cluster and that is served by the first transmission and reception point is received, and if the channel quality is less than or equal to a third threshold, sending the first configuration information, wherein channel quality of a channel between the first transmission and reception point and a terminal device that is in the second cluster and that is served by the first transmission and reception point is greater than or equal to a fourth threshold, and the fourth threshold is greater than the third threshold.

5. The method according to claim 2, wherein sending the first configuration information comprises:
if the communication rate between the first transmission and reception point and the terminal device that is in the first cluster and that is served by the first transmission and reception point is received, and if the communication rate is less than or equal to a fifth threshold, sending the first configuration information, wherein a communication rate between the first transmission and reception point and a terminal device that is in the second cluster and that is served by the first transmission and reception point is greater than or equal to a sixth threshold, and the sixth threshold is greater than the fifth threshold.

6. A communication method, wherein the method comprises:
determining that a first transmission and reception point is configured to belong to a first cluster; and
receiving first configuration information, wherein the first configuration information indicates that the first transmission and reception point belongs to a second cluster.

7. The method according to claim 6, wherein before receiving the first configuration information, the method further comprises:
reporting at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point.

8. A communication method, wherein the method comprises:
configuring, by a central unit, a first transmission and reception point to belong to a first cluster;
configuring, by a distributed unit based on the configuration of the central unit, the first transmission and reception point to belong to the first cluster;
sending, by the central unit, first configuration information to the distributed unit, wherein the first configuration information indicates that the first transmission and reception point belongs to a second cluster; and
sending, by the distributed unit, the first configuration information to the first transmission and reception point.

9. The method according to claim 8, wherein before sending, by the central unit, the first configuration information to the distributed unit, the method further comprises:
receiving, by the distributed unit from the first transmission and reception point, at least one of the following network status information: a quantity of terminal devices in the first cluster that are served by the first transmission and reception point, channel quality of a channel between the first transmission and reception point and the terminal device that is in the first cluster and that is served by the first transmission and reception point, and a communication rate between the first transmission and reception point and the terminal device that is in the first cluster and that is served by the first transmission and reception point; and
sending, by the distributed unit to the central unit, the at least one piece of network status information reported by the first transmission and reception point.

10. The method according to claim 9, wherein sending, by the central unit, the first configuration information to the distributed unit comprises:
if the central unit receives the quantity of terminal devices in the first cluster that are served by the first transmission and reception point, and the quantity of terminal devices in the first cluster that are served by the first transmission and reception point is greater than or equal to a first threshold, sending, by the central unit, the first configuration information to the distributed unit, wherein a quantity of terminal devices in the second cluster that are served by the first transmission and reception point is less than or equal to a second threshold, and the second threshold is less than the first threshold.

11. The method according to claim 9, wherein sending, by the central unit, the first configuration information to the distributed unit comprises:
if the central unit receives the channel quality of the channel between the first transmission and reception point and the terminal device that is in the first cluster and that is served by the first transmission and reception point, and if the channel quality is less than or equal to a third threshold, sending, by the central unit, the first configuration information to the distributed unit, wherein channel quality of a channel between the first transmission and reception point and a terminal device that is in the second cluster and that is served by the first transmission and reception point is greater than or equal to a fourth threshold, and the fourth threshold is greater than the third threshold.

12. The method according to claim 9, wherein sending, by the central unit, the first configuration information to the distributed unit comprises:
if the central unit receives the communication rate between the first transmission and reception point and the terminal device that is in the first cluster and that is served by the first transmission and reception point, and if the communication rate is less than or equal to a fifth threshold, sending, by the central unit, the first configuration information to the distributed unit, wherein a communication rate between the first transmission and reception point and a terminal device that is in the second cluster and that is served by the first transmission and reception point is greater than or equal to a sixth threshold, and the sixth threshold is greater than the fifth threshold.

13. A communication system, wherein the system comprises a first distributed unit and a first transmission and reception point;
the first distributed unit is configured to configure the first transmission and reception point to belong to a first cluster; and
the first distributed unit is further configured to send first configuration information to the first transmission and reception point, wherein the first configuration information indicates that the first transmission and reception point belongs to a second cluster.

14. The system according to claim 13, wherein the system further comprises a second distributed unit, the first distributed unit is connected to the second distributed unit, the first distributed unit is responsible for managing the first cluster, and the second distributed unit is responsible for managing the second cluster.

15. A communication system, wherein the system comprises a central unit, a distributed unit, and a first transmission and reception point;
the central unit is configured to configure the first transmission and reception point to belong to a first cluster;
the distributed unit is configured to configure, based on the configuration of the central unit, the first transmission and reception point to belong to the first cluster;
the central unit is further configured to send first configuration information to the distributed unit, wherein the first configuration information indicates that the first transmission and reception point belongs to a second cluster; and
the distributed unit is further configured to send the first configuration information to the first transmission and reception point.

16. A communication apparatus, wherein the apparatus comprises a unit configured to perform the method according to any one of claims 1 to 7.

17. A computer-readable storage medium, wherein the storage medium stores a computer program or instructions, and when the computer program or the instructions are executed by an apparatus, the method according to any one of claims 1 to 12 is implemented.

18. A computer program product, wherein the computer program product comprises related program instructions, and when the related program instructions are executed, the method according to any one of claims 1 to 12 is implemented.
